# EUROPÄISCHE PATENTSCHRIFT

(11) **EP 1 792 419 B1**
(45) Veröffentlichungstag und Bekanntmachung des Hinweises auf die Patenterteilung: **08.08.2018**
(21) Anmeldenummer: 05767505.0
(22) Anmeldetag: 28.06.2005
(51) Int. Cl.: H04B 10/114

(54) **INDIREKTES OPTISCHES FREIRAUM-KOMMUNIKATIONSSYSTEM UND VERFAHREN ZUR BREITBANDIGEN ÜBERTRAGUNG VON HOCHRATIGEN DATEN**
INDIRECT OPTICAL FREE-SPACE COMMUNICATIONS SYSTEM AND METHOD FOR THE BROADBAND TRANSMISSION OF HIGH-SPEED DATA
SYSTEME DE COMMUNICATION OPTIQUE INDIRECT EN ESPACE DEGAGE ET PROCEDE DE TRANSMISSION LARGE BANDE DE DONNEES A VITESSE ELEVEE

(30) Priorität: 23.09.2004 DE 102004046503
(43) Veröffentlichungstag der Anmeldung: 06.06.2007
(73) Patentinhaber: Airbus Operations GmbH, 21129 Hamburg (DE)
(72) Erfinder: SCHMITT, Nikolaus-Peter, 85649 Brunnthal-Otterloh (DE)
(74) Vertreter: Bird & Bird LLP
(86) Internationale Anmeldenummer: PCT/DE2005/001141
(87) Internationale Veröffentlichungsnummer: WO 2006/032221

(56) Entgegenhaltungen:
- EP-A- 0 629 881
- WO-A-96/11539
- JP-A- H09 107 329
- US-A- 5 896 215
- US-A- 5 986 787
- US-A1- 2002 171 898

## Beschreibung

Die vorliegende Erfindung betrifft ein indirektes optisches Freiraum-Kommunikations-System zur breitbandigen Übertragung von hochratigen Daten gemäß dem Oberbegriff von Patentanspruch 1 sowie ein Verfahren zur breitbandigen Übertragung von hochratigen Daten gemäß dem Oberbegriff von Patentanspruch 10. Die Kommunikation zwischen Computern oder sonstigen technischen Systemen ist nicht nur in Büro- oder Computerräumen von Bedeutung, sondern zunehmend auch im Inneren von Transportmitteln, da auch dort die Datenkommunikation immer wichtiger wird. Beispielsweise sind größere Transportmittel, wie z.B. Busse, Züge, Flugzeuge, Schiffsräume, usw. mit Displays, Kopfhöreranschlüssen, Eingabegeräten bzw. Empfängern oder Datenstationen ausgestattet. Damit kann der Fahrgast während der Fahrt unterhalten oder informiert werden, ServicePersonal kann Daten mit zentralen Datenstationen austauschen etc. Bei derartigen Anwendungen werden zum Teil sehr große Datenmengen meist von einem zentralen Datenspeicher bzw. Sender an einen oder mehrere Datenempfänger übertragen oder umgekehrt.

Die Datenübertragung, die analog oder digital erfolgen kann, erfolgt beispielsweise über elektrische Kabelverbindungen zwischen Sender und Empfänger. Damit ist jedoch eine Vielzahl von Nachteilen verbunden.

Zunächst muss zu jedem Endgerät ein Kabel verlegt werden, d.h. jeder Empfänger/Sender bzw. jede Datenstation im Innenraum muss mit einem entsprechenden Stecker ausgerüstet werden und das Kabel muss an der Stelle der Ankopplung mit einer entsprechenden Steckverbindung versehen sein. Der Empfänger/Sender ist damit nur bedingt flexibel bewegbar, er benötigt darüber hinaus eine entsprechend normierte Steckverbindung, und die Anzahl der möglichen Empfänger ist durch die am Kabel vorhandene Steckerzahl oder durch die Anzahl der Kabel vorgegeben. Auch ist der Ort der Datenstation durch die vorgegebene räumliche Anordnung beschränkt. Dies ist insbesondere dort problematisch, wo Anzahl und Ort der Empfänger nicht vorgegeben ist und flexibel gehalten werden muss. Eine Ausrüstung mit sehr vielen Kabeln und Steckverbindungen ist aber teuer und störanfällig.

Elektrische Kabel sind weiterhin Störungen durch elektromagnetische Einstrahlung ausgesetzt (EMV). Hierbei kommt es insbesondere bei der Übertragung von analogen Signalen zu starken Qualitätsbeeinträchtigungen, aber auch im Falle einer digitalen Übertragung treten Störungen auf. Dieses Problem ist insbesondere in Transportmitteln schwierig zu handhaben, da sich bei einem bewegten Fahrzeug, anders als bei festen Gebäuden, die Umwelt und die Einstrahlung auf die Übertragungsstrecke nicht konstant halten lässt, so dass während der Bewegung eine Einstrahlung höchstens durch überdimensionale Abschirmung verringert werden kann. Derart stark abgeschirmte Kabel sind aber schwer, teuer und unbeweglich. Hinzu kommt noch, dass das Transportmittel selbst eine starke elektromagnetische Verunreinigung bzw. EMV verursachen kann, welche nur schwer abzuschirmen ist.

Weiterhin ist ein elektrisches Kabel nicht nur Einstrahlungen ausgesetzt, sondern es strahlt auch selbst ab. Hierdurch wird wiederum EMV gegenüber anderen elektronischen Systemen innerhalb des Transportmittels oder aber bezüglich anderer Transportmittel, die sich zufällig in der Nähe aufhalten, verursacht. Ferner ist ein solches System auch abhörbar.

Als weiterer Nachteil ist die beschränkte Datenrate anzusehen, die aufgrund der beschränkten Bandbreite elektrischer Kabel übertragen werden kann. Je höher die Datenrate ist, desto schwerer ist sie über eine elektrische Verbindung aufgrund von Dämpfung und Dispersion übertragbar, und desto größer ist das Problem der EMV und der Schirmung.

Um das Problem der EMV zu bewältigen, wird versucht, die Datenübertragung durch Lichtleiter mittels modulierter Lichtsignale auszuführen. Hierbei wird eine Lichtquelle zumeist amplitudenmoduliert. Auch Frequenz- und Phasenmodulation sind möglich. Das Licht der Sendequelle wird über einen Glas- oder Kunststoff-Lichtquellenleiter, welcher das elektrische Kabel ersetzt, zum Empfänger übertragen. Der Empfänger enthält einen Fotodetektor zur Rückwandlung des optischen Signals in ein elektrisches Signal. Hierbei sind sehr hohe Datenraten erreichbar und die EMV wird ausgeschlossen.

Ein bestehendes Problem bleibt jedoch die Inflexibilität bezüglich der Anzahl und des Ortes der anzubindenden Stationen im Innenraum, zumal die Kosten für den Lichtwellenleiter und die Steckverbindungen gegenüber elektrischen Verbindungen im Allgemeinen teuer sind und diese schwerer zu verlegen sind. Auch sind freie Steckverbindungen für nachträglich anzuschließende Stationen schwer bzw. nur unter hohem Kostenaufwand anzubringen.

Um das Problem der Verkabelung zu lösen, wurde versucht, drahtlose Kommunikationssysteme einzusetzen, so wie es im Bereich der Funkübertragung seit langem bekannt ist. Analog zur Radio- und Funkgeräte-Kommunikation können alle Arten von Daten per Funk übertragen werden. Hierbei ist die mögliche Datenübertragungsrate allerdings abhängig von der verwendeten Frequenz der elektromagnetischen Strahlung. Neuerdings gibt es kleine Mikrowellen-Transceiver mit Frequenzen im Gigahertz-Bereich, welche in der Praxis eine Datenkommunikation im Bereich einiger Mb/s ermöglichen. Nachteil hier ist allerdings die prinzipiell beschränkte Datenübertragungsrate, das nach wie vor bestehende Problem der EMV-Einstrahlung und der EMV-Abstrahlung in andere Systeme des Transportmittels, wie auch das Problem der Abhörsicherheit. Bei Transportmitteln, die überwiegend in unterschiedlichen Ländern der Welt eingesetzt werden, wie beispielsweise Flugzeuge oder Schiffe, sind zudem die lokalen Gesetzesbestimmungen für die verwendeten Frequenzbänder und Modulationsarten zu beachten, was die Auswahl der zur Verfügung stehenden Frequenzbänder stark einschränkt und ihre internationale Verwendung verkompliziert.

Eine alternative Lösung ist ein drahtloses, aber optisches Datenübertragungssystem. Hierbei wird die optische, mit Daten modulierte Strahlung, direkt in den Raum gestrahlt und von einem Fotodetektor empfangen (beispielsweise IrDA-Standard). Dieses Verfahren wird beispielsweise für die Datenübertragung zwischen einem mobilen Computer und einem Drucker verwendet. Nachteil dieses Verfahrens ist jedoch, dass hier eine direkte Sichtverbindung zwischen Sender und Empfänger gegeben sein muss und der Abstand zwischen beiden nur relativ gering sein darf, typischerweise < 1 - 2 m. Die Strahlung muss innerhalb eines bestimmten Winkelbereichs des Empfängers liegen, typischerweise in einem Bereich < +/-15°, und in direktem Sichtkontakt mit ihm stehen.

IR-Datenübertragungssysteme mittels gestreuter IR-Strahlung, die wesentlich größere Reichweiten und Akzeptanzwinkel aufweisen und sich zur Verbindung von Computern in Büroräumen eignen, sind beispielsweise in F.R. Gfeller, U. Bapst, Proceedings of the IEEE, Vol. 67, No. 11, November 1979 oder in amerikanischen Patentschrift US2002/0171898 beschrieben. Ein weiteres System ist in der deutschen Patentschrift DE 101 07 538 B4 beschrieben. Ein derartiges System ermöglicht bereits eine erhebliche Bandbreite im Bereich einiger Mb/s bis ca. 100 Mb/s und Reichweiten im Bereich von vielen Metern ohne Erfordernis der Strahlausrichtung durch Verwendung gestreuter Strahlung, wobei die Bandbreite im wesentlichen durch die bei Mehrfachreflexion auftretenden Mehrdeutigkeiten (Multipath-Ausbreitung) beschränkt ist.

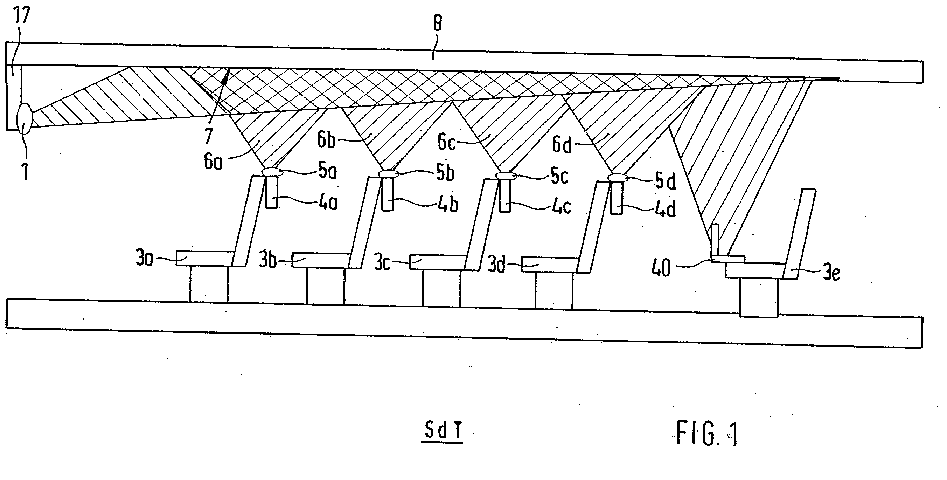

Fig. 1 zeigt ein derartiges bekanntes optisches Freiraum-Kommunikationssystem zur breitbandigen Übertragung von hochratigen Daten. Es umfasst einen Sender 1, der eine modulierbare Lichtquelle aufweist und mindestens einen Empfänger 5a, 5b, 5c, 5d, der einen Fotodetektor umfasst, um vom Sender 1 abgestrahltes Licht zu empfangen und in ein elektrisches Signal umzuwandeln, wobei Sender 1 und Empfänger 5a, 5b, 5c, 5d derart ausgestaltet sind, dass das vom Sender 1 abgestrahlte Licht nach Streuung oder Reflexion an einer Fläche 7 innerhalb eines Transportmittels durch den Empfänger 5a, 5b, 5c, 5d detektierbar ist und/oder detektiert wird. Die Fläche 7 liegt im Inneren bzw. im Innenraum eines Transportmittels, z.B. an einer Decke 8. Als Lichtquelle werden z.B. ein oder mehrere LEDs, Laserdioden, Kantenemitter-Laserdioden und / oder VCSEL-Laser verwendet und es kann eine bidirektionale Kommunikation zwischen Sender und Empfänger durchgeführt werden.

Eine bidirektionale Auslegung ist aufgrund der höheren Flexibilität vorzuziehen. Wenn daher im Folgenden von Sender gesprochen ist, so meint dies zum Beispiel insbesondere auch denjenigen Sender oder Sendeempfänger, welcher bspw. am Rumpf des Transportmittels befestigt ist, und Datenstation zum Beispiel insbesondere auch denjenigen Empfänger oder auch Sendeempfänger, welcher dem Benutzer zugewandt ist, also bspw. am Sitz des Passagiers bzw. an der mit diesem Sitz verbundenen Multimediaeinheit angebracht ist, an einem Handgerät o.ä. Um dies unterschieden zu können wird im Folgenden daher einfach von Verteiler und Datenstation gesprochen.

Aufgabe der vorliegenden Erfindung ist es, das bekannte optische Freiraum-Kommunikationssystem so weiterzubilden, dass die Bandbreite erhöht wird. Insbesondere sollen im Inneren von Transportmitteln, wie zum Beispiel Flugzeugen oder Fahrzeugen, hohe Datenraten im Bereich insgesamt von Gbit/s oder mehr übertragen werden.

Diese Aufgabe wird gelöst durch das optische Freiraum-Kommunikationssystem zur breitbandigen Übertragung von hochratigen Daten gemäß Patentanspruch 1, und durch das Verfahren zur breitbandigen Übertragung von hochratigen Daten gemäß Patentanspruch 13. Weitere vorteilhafte Merkmale, Aspekte und Details der Erfindung ergeben sich aus den abhängigen Ansprüchen, der Beschreibung und den Zeichnungen.

Das erfindungsgemäße indirekte optische Freiraum-Kommunikationssystem dient zur breitbandigen Übertragung von hochratigen Daten und umfasst einen Sender, der eine modulierbare Lichtquelle beinhaltet, sowie einen Empfänger, der einen Photodetektor beinhaltet, um vom Sender abgestrahltes Licht zu empfangen und in ein elektrisches Signal umzuwandeln, wobei der Sender und der Empfänger auf mindestens eine gemeinsame Fläche gerichtet sind, die das vom Sender abgestrahlte Licht reflektiert, bevor es zum Empfänger gelangt, wobei das Freiraum-Kommunikationssystem zellulär aufgebaut ist und mehrere Zellen aufweist, die jeweils mindestens einen Sender und mindestens einen Empfänger umfassen, und wobei die Zellen derart ausgestaltet sind, dass ein Übersprechen zu einer jeweils benachbarten Zelle verhindert wird, so dass die Zellen voneinander unabhängig sind.

Mit dem System können hohe Datenraten im Bereich von Gbit/s oder mehr von einem Sender auf mehrere Empfänger (unidirektional) bzw. von einem Sender zu mehreren verteilten Empfängern (unidirektional broadcast) oder zwischen Sendeempfängern (bidirektional) optisch übertragen werden. Das System ist im Inneren von Transportmitteln oder Fahrzeugen einsetzbar und ermöglicht eine sichere
Übertragung von hohen Datenraten bei reduziertem Aufwand und erhöhter Bandbreite.

Mit dem Kommunikationssystem ist es insbesondere möglich, auf einfache Weise Daten mit hoher Rate in einem Transportmittel, wie beispielsweise einem Auto, Flugzeug, Zug, Schiff, Satellit, oder Ähnlichem zu übertragen, ohne dass eine direkte Sichtverbindung zwischen Sender und Empfänger gegeben sein muss, und ohne dass eine Verkabelung zwischen Sender und Empfänger zur Datenübertragung notwendig ist. Durch die Erfindung wird ferner das Problem der EMV überwunden und es ist darüber hinaus eine erhöhte Abhörsicherheit gewährleistet.

Durch die Erfindung können z.B. in einem Flugzeug mit zwei oder mehreren Gängen zwischen den Sitzreihen mehrere Sender mit zugeordneten Empfängern unabhängig voneinander die volle Bandbreite von beispielsweise ca. 100 Mbit/s nutzen, was bereits einer Verdopplung der insgesamt nutzbaren Bandbreite entspricht. Es werden somit zwei oder mehr auf demselben physikalischen Medium basierende "Zellen" eines Kommunikationssystemes realisiert, die dank der relativ gut ausrichtbaren Beleuchtung kein Übersprechen aufweisen. Dies ist lediglich im hier verwendeten optischen Bereich möglich, da bei Funkwellen eine solche scharfe Abgrenzung aufgrund der bei niedrigeren Frequenzen ungerichteteren Ausbreitung nicht möglich sein würde.

Vorteilhafterweise ist die Fläche, auf die die Verteiler bzw. Sender und Datenstationen bzw. Empfänger ausgerichtet sind, im Innenraum eines Transportmittels angeordnet, in dem die Datenübertragung erfolgt, bevorzugt in einem Auto, Flugzeug, Zug, Schiff oder Satellit, usw. Dadurch kann die Datenübertragung insbesondere auf einfache Weise in mobilen Systemen stattfinden. Die Kosten werden reduziert und der Komfort wird erhöht, da keine Einschränkungen oder allenfalls nur geringe Einschränkungen hinsichtlich des Empfangsortes vorgegeben sind.

Vorteilhaft sind Mittel zur Strahlformung des jeweiligen Senders, und/oder Mittel zur Begrenzung des Empfangsöffnungswinkels des jeweiligen Empfängers vorgesehen, um das Übersprechen zu Verhindern. Dadurch wird die optische Strahlausbreitung auf geeignete Weise so geformt, dass sich nur räumlich beschränkte Ausleuchtungen ergeben. Dabei wird z.B. auch berücksichtigt, dass die Datenraten aufgrund von Multipath-Ausbreitung auf etwa 100 Mbit/s beschränkt sind.

Bevorzugt ist das indirekte optische Freiraum-Kommunikationssystem derart ausgestaltet, dass sich die Reflexions- oder Streubereiche der gemeinsamen Flächen innerhalb benachbarter Zellen nicht gegenseitig überlappen. Dadurch können z.B. entlang eines Ganges in einem Flugzeug oder allgemein Transportmittel unabhängige Kommunikationszellen erreicht werden.

Beispielsweise werden in einem Flugzeug mit zwei Gängen die Deckenpanele der beiden Gänge von getrennten Sendern oder Sendeempfängern so angestrahlt, dass es keine Überlappung der beleuchteten bzw. im Sichtfeld der Empfänger befindlichen Flächen der Sender und Empfänger beider Gänge gibt.

Insbesondere können zum Beispiel Bereiche eines Flugzeuges entlang desselben Ganges derart getrennt beleuchtet werden, dass die aneinander angrenzenden gemeinsamen Flächen von verschiedenen Verteilern und Datenstationen jeweils eines Bereiches keine Überlappung mit denen des anderen Bereiches aufweisen und unabhängig voneinander kommunizieren können, so dass auch entlang eines Ganges verschiedene, unabhängige und kein Übersprechen aufweisende Kommunikationszellen entstehen. Eine Abgrenzung der ausgeleuchteten Flächen kann entweder durch geeignete Wahl der Sende- und Empfangsoptiken oder durch Abblenden mit optisch nicht-transmittierenden Strahlblenden an der Grenze der voneinander unabhängigen beleuchteten Flächen erfolgen.

Bevorzugt sind deshalb ein oder mehrere Abschattungselemente vorgesehen, die zur Abschattung des von der gemeinsamen Fläche einer Zelle reflektierten Lichts gegenüber einem Empfänger dienen, der zu einer anderen Zelle gehört.

Besonders vorteilhaft weisen die Lichtquellen benachbarter Zellen unterschiedliche Wellenlängen auf. Dadurch können die beleuchteten und/oder im Sichtfeld der Empfänger befindlichen Flächen an den Grenzen ggf. leicht überlappen. Die unterschiedlichen Wellenlängen des Lichts betragen beispielsweise 810 nm und 960 nm, welche durch einfache Filter im Empfänger besonders leicht trennbar sind. Sendeseitig werden deshalb entsprechende Lichtquellen, vorzugsweise LEDs oder Laser der beiden Wellenlängenbereiche, verwendet.

Besonders bevorzugt werden die unterschiedlichen Maßnahmen miteinander kombiniert. Dadurch ergeben sich besondere Vorteile:
Während beispielsweise die beiden Gänge eines Flugzeuges als unabhängige Kommunikationszellen aufgrund der im Grenzbereich durch die Gepäckablagen des Mittelbereichs stattfindenden Abschattung durch die Strahlführung getrennt sind, werden entlang der Gänge leicht überlappende Zellen mit unterschiedlicher Wellenlänge realisiert. Die Ausleuchtung/Einstellung des Sichtfeldes erfolgt nun vorzugsweise so, dass zwar Überlappungen im Grenzbereich angrenzender Zellen möglich sein können (aber nicht müssen), aber keine Überlappung mit der übernächsten Zelle stattfindet. Hierdurch werden lediglich zwei unterschiedliche Wellenlängen L1 und L2 entlang eines Ganges gebraucht, welche etwa in der Anordnung L1 - L2 - L1 - L2 - L1 - L2 alternieren. Hierdurch ist der apparative Aufwand durch die auf zwei beschränkte Zahl erforderlicher Wellenlängen gering, zumal nicht sehr scharf gefiltert werden muss, andererseits kann durch die alternierende Verwendung eine nahezu beliebig hohe Datenrate realisiert werden.

Das heißt, dass die Zellen vorzugsweise in einer Reihe angeordnet sind, wobei die Wellenlängen des Lichts in den aneinandergrenzenden Zellen alternieren.

Vorteilhafterweise sind die Zellen aber auch räumlich voneinander getrennt. Die Fläche einer Zelle ist insbesondere eine Oberfläche einer Wand oder eines Gegenstandes im Inneren eines Raumes, in dem die Daten übertragen werden.

Die Lichtquelle des jeweiligen Senders umfasst zum Beispiel ein oder mehrere LED's, Laserdioden, Kantenemitter-Laserdioden, und/oder VCSEL-Laser.

Der jeweilige Empfänger umfasst zum Beispiel eine Lichtquelle und der jeweilige Sender zum Beispiel einen Photodetektor, um eine bidirektionale Kommunikation auszuführen. Im Betrieb kann ein einziger Sender einer Zelle eine Vielzahl von Empfängern gleichzeitig mit gleichen oder unterschiedlichen Daten versorgen.

Gemäß einem anderen Aspekt der Erfindung wird ein Verfahren zur indirekten optischen Übertragung von hochratigen Daten bereitgestellt, mit den Schritten: Erzeugen von Licht mittels einer Lichtquelle, das mit der Frequenz von zu übertragenden Daten moduliert wird; Senden des modulierten Lichts auf eine Fläche, die das Licht reflektiert und/oder streut; Empfangen des von der Fläche gestreuten und/oder reflektierten Lichts, so dass es auf indirektem Wege von der Lichtquelle zum Empfänger gelangt; und Umwandeln des modulierten Lichts in ein elektrisches Signal, wobei das Senden und das Empfangen des Lichts in mehreren voneinander unabhängigen Zellen erfolgt, die jeweils mindestens einen Sender und mindestens einen Empfänger umfassen, und wobei ein Übersprechen zu einer jeweils benachbarten Zelle aktiv verhindert wird.

Die Vorteile, die oben in Bezug auf das erfindungsgemäße System genannt sind gelten auch für das erfindungsgemäße Verfahren und umgekehrt.

Vorteilhafterweise wird das vom Sender einer Zelle abgestrahlte Licht in seinem Abstrahlwinkel derart begrenzt, dass es nicht zu Empfängern anderer Zellen gelangt.

Auch kann beispielsweise der Empfangsöffungswinkel des jeweiligen Empfängers einer Zelle derart begrenzt werden, dass das Licht von den Lichtquellen benachbarter Zellen nicht zum Empfänger gelangt.

Insbesondere kann das von der Fläche einer Zelle reflektierte Licht gegenüber einem Empfänger, der zu einer anderen Zelle gehört, abgeschattet werden.

Vorteilhafterweise wird in benachbarten Zellen Licht mit unterschiedlichen Wellenlängen verwendet.

Die Erfindung wird nachfolgend beispielhaft anhand der Figuren beschrieben. Es zeigen:
- **Fig. 1**: ein Beispiel nach dem Stand der Technik mit einer Strahlführung einer Datenkommunikationsstrecke ohne Sichtverbindung;
- **Fig. 2**: eine erfindungsgemäße Anordnung in schematischer Darstellung gemäß einer Ausführungsform, bei der die beiden Gänge eines zweigängigen Flugzeuges als getrennte Kommunikationszellen betrieben werden;
- **Fig. 3**: eine erfindungsgemäße Anordnung in schematischer Darstellung, bei der entlang eines Ganges eines F ugzeuges unabhängige, übersprechungsfreie Zellen betrieben werden;
- **Fig. 4a**: eine erfindungsgemäße Anordnung gemäß Fig. 3, wobei das Übersprechen durch geeignete Strahlführung verhindert wird;
- **Fig. 4b**: eine erfindungsgemäße Anordnung gemäß Fig. 3, wobei das Übersprechen durch geeignete Strahlblenden oder Abschattungselemente verhindert wird;
- **Fig. 5a**: eine erfindungsgemäße Anordnung in schematischer Darstellung, bei der entlang eines Ganges eines Flugzeuges mehrere unabhängige, übersprechungsfreie Zellen betrieben werden durch Verwendung zweier unterschiedlicher Übertragungswellenlängen;
- **Fig. 5b**: eine schematische Darstellung zweier benachbarter Zellen unterschiedlicher Übertragungswellenlänge;
- **Fig. 6**: eine bevorzugte Ausführungsform der Erfindung durch Kombination der vorgenannten Verfahren.

In Fig. 1 ist eine schematische Schnittansicht eines bekannten optischen Freiraum-Kommunikationssystems gezeigt, das durch die vorliegende Erfindung weitergebildet wird. Es ist im Detail in der Patentschrift DE 101 07 538 B4 beschrieben.

Ein "Verteiler" oder Sender 1, welcher am Transportmittel, beispielsweise an einer Halterung 17, befestigt ist, ist derart angeordnet, dass das von ihm abgestrahlte Licht eine entfernt liegende Fläche 7 an einer Decke 8 eines Transportmittels bestrahlt, wobei das Transportmittel beispielsweise ein Flugzeug, ein Kraftfahrzeug, ein Zug, Bus, Bahn, Satellit oder Ähnliches ist. Vom Verteiler 1 entfernt sind Datenstationen 5a, 5b, 5c, 5d, 40 und zugehörige Multimediastationen 4a, 4b, 4c,4d angeordnet, die das von der Fläche 7 reflektierte bzw. gestreute Licht empfangen. Somit gelangt das Licht auf indirektem Wege vom Verteiler 1 zu den Datenstationen , wobei ein schräg schraffierter Bereich das vom Verteiler abgestrahlte Licht veranschaulicht, und ein anders herum schräg schraffierter Bereich 6a, 6b, 6c, 6d den Empfangsbereich der jeweiligen Datenstationen darstellt. Der überlappend gekreuzt schraffierte Bereich in der Fig. 1 bezeichnet dasjenige vom Verteiler 1 ausgesandte Licht, welches im jeweiligen Empfangsbereich 6a - 6d der Datenstationen 5a - 5d, 40 auf diese gelangt. Dadurch, dass das Licht an der Fläche 7 gestreut wird, muss kein direkter Sichtkontakt zwischen dem Verteiler 1 und den Datenstationen 5a - 5d, 40 bestehen, d.h., es kann zwischen beiden sogar ein Hindernis vorhanden sein. Die Bezugszeichen 3a-3e kennzeichnen in dieser Darstellung Passagiersitze.

Das bekannte Freiraum-Kommunikationssystem gemäß Fig. 1 ist Teil einer bevorzugten Ausführungsform der Erfindung, die das bekannte System weiterbildet.

Die Fläche 7 kann z.B. ein Teil der Innenverkleidung des Transportmittels sein, beispielsweise der Dachhimmel eines Kraftfahrzeugs oder die Seitenverkleidung der Türen, die Verkleidung von Dachsäulen, oder auch IR-reflektierende Fensterflächen, usw. Weiterhin ist es möglich, als Flächen 7 beispielsweise in einem Flugzeug oder Zug das Dach, den Boden, die Seitenwände,

Verkleidungsteile des Innenraums, etc. vorzusehen. Allgemein ausgedrückt ist jede Fläche geeignet, die mit einer Lichtquelle angestrahlt werden kann und dann zumindest einen Teil der auftreffenden Strahlung reflektiert oder streut.

In Aufenthaltsräumen oder Transportmitteln sind eine Vielzahl derartiger Flächen vorhanden, die in der erfindungsgemäßen Art und Weise als Teil des optischen Freiraum-Kommunikationssystems verwendet werden können. Es ist aber auch möglich, ein spezielles Reflexions- oder Streuelement mit einer strukturierten Oberfläche zum Umlenken der Lichtstrahlen als Teil des Systems vorzusehen.

Im Falle bidirektionaler Übertragung sind in den Datenstationen 5a, 5b, 5c, 5d, 40 auch Sendeeinheiten integriert. Die Bereiche 6a, 6b, 6c, 6d sind daher zugleich auch die entsprechenden Öffnungswinkel der in den Datenstationen integrierten Sendeeinheiten. Die beiden Öffnungswinkel von Empfänger und Sender einer Datenstation müssen nicht identisch sein, die Unterscheidung der Übertragungsrichtung wird dann vom Protokoll übernommen. Sie werden jedoch in dieser prinzipiellen Darstellung gemäß Fig. 1 aus Vereinfachungsgründen nicht unterschieden.

An dem zusätzlichen Sitz 3e ist ein tragbarer Computer oder Handgerät 40 angeordnet, der als Datenstation ausgestaltet ist bzw. eine erfindungsgemäße Eingangseinheit und/oder Sendeeinheit zur Kommunikation über die Fläche 7 aufweist.

Der Verteiler 1 besteht gemäß der bevorzugten Ausführungsform der Erfindung aus einer oder mehreren LEDs, Kantenemitter-Laserdioden, Laserdioden oder VCSEL-Laserdioden als Lichtquelle. Die Ausgangsleistung der Lichtquelle ist hierbei dadurch nach unten beschränkt, dass, abhängig von den geometrischen Gegebenheiten des Transportmittels sowie der Reflexivität der Oberflächen im Inneren, eine hinreichende Lichtmenge über eine Reflexion zu den Datenstationen gelangen kann. Nach oben hin wird die Ausgangsleistung der Lichtquelle des Verteilers 1 durch die Grenze der Augensicherheit beschränkt, d.h., hier wird im Betrieb eine Augenschädigung ausgeschlossen. Je nach spezieller Ausführung des Transportmittels kann mit entsprechend niedriger Ausgangsleistung gearbeitet werden.

Falls jedoch die erforderliche Ausgangsleistungen herkömmlicher LEDs oder VCSEL-Laserdioden im nahen Infrarot, d.h. meist mit einer Wellenlänge < 1 µm, höher als die gesetzlich vorgegebenen Grenzen liegen, so können LEDs oder VCSEL-Laserdioden verwendet werden, welche bei einer Wellenlänge mit deutlich höherer Schädigungsgrenze bezüglich der Netzhautverträglichkeit emittieren, beispielsweise bei 1,55 µm.

Der Verteiler 1 welcher am Transportmittel, mittels der Halterung 17 angebracht ist, kann in einem Flugzeug beispielsweise längs des Rumpfes strahlen, so dass er entlang eines Ganges ein oder mehrere Deckenpaneele 8 beleuchtet. Er kann ebenso quer zum Rumpf angebracht sein, sodass er beispielsweise ein einziges Deckenpaneel von Headrack zu Headrack beleuchtet, oder unter einem beliebeigen Winkel dazwischen angeordnet sein mit entsprechend schräger Beleuchtungscharakteristik. Beispielsweise kann er auch zusammen mit den Beleuchtungseinrichtungen der Kabine in einem gemeinsamen Gehäuse untergebracht sein. Im Falle von Leuchtdioden als Kabinenbeleuchtungsmittel wäre dies sogar besonders vorteilhaft.

Der Empfänger, welcher mindestens in den Datenstationen 5a - 5d bzw. im Handgerät 40, aber auch im Verteiler 1 enthalten ist, besteht aus einem oder mehreren Fotodetektoren, deren Fläche durch die Kapazität und damit durch die mögliche Datenrate beschränkt ist. Nach unten ist die Beschränkung durch die Empfindlichkeit vorgegeben. Zur Detektion der über Reflexion im Inneren des Transportmittels auf den Detektor gelangenden Strahlung beträgt die Detektorfläche zumeist mindestens einige mm².

Die Verwendung von LEDs erlaubt aufgrund der hohen Divergenz eine weitflächige Bestrahlung der reflektierenden bzw. Flächen oder Innenwände des Transportmittels, allerdings ist die Ausgangsleistung hierbei beschränkt. Gegebenenfalls werden mehrere LEDs zur Erzeugung höherer Leistungen verwendet.

VCSEL-Laserdioden, die eine geringe Baugröße aufweisen und insbesondere auch kostengünstig gefertigt werden können, verfügen über weitaus höhere Ausgangsleistungen bei wesentlich höherer Effizienz. D.h., es treten geringe Ströme auf, typischerweise < 10 - 20 mA bei weniger als 5 V. Die Abstrahlcharakteristik dieser VCSELs ist allerdings wesentlich gebündelter, wobei die Divergenz typischerweise im Bereich einiger Grad liegt. VCSEL-Laserdioden können zudem aufgrund der geringen Spannungen und äußerst geringen Ströme direkt von elektronischen Treiberbausteinen bzw. Standard-TTL-Treibern angesteuert werden. Dies erfolgt gegebenenfalls unter Verwendung eines Spannungsteilers. Dadurch wird die Stromversorgung sehr einfach, und zusammen mit der geringen Kapazität der VCSEL-Elemente wird eine äußerst hohe Datenrate ermöglicht, die z.B. größer ist als 1 Gb/s.

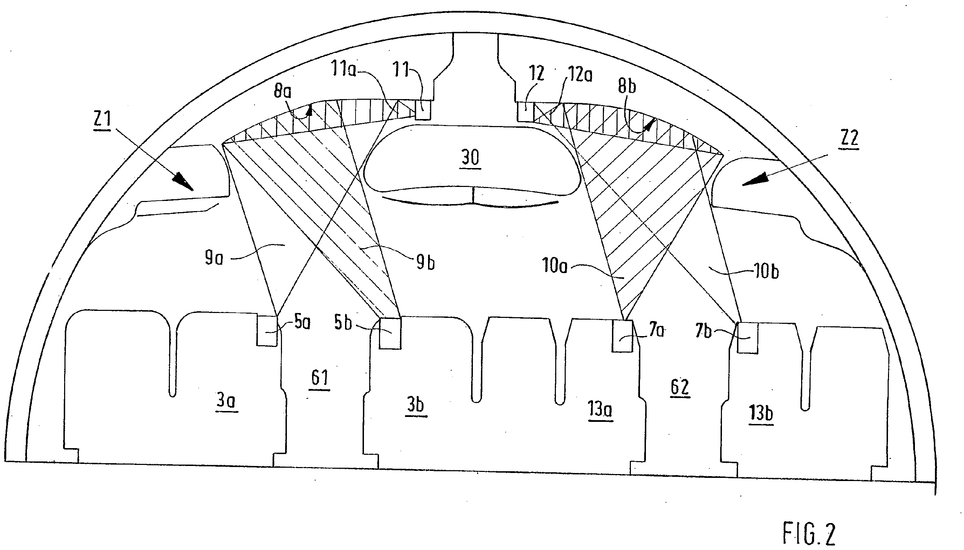

Fig. 2 zeigt eine erfindungsgemäße Anordnung mit räumlich getrennten Bereichen zweier Gänge 61 und 62, die Zellen Z1, Z2 bilden; die zugehörigen Elemente der beiden Zellen Z1, Z2 sind wie folgt bezeichnet: 5a, 5b stellen Datenstationen des Ganges 61 dar, während mit den Bezugszeichen 7a und 7b die Datenstationen des Ganges 62 gekennzeichnet sind. Dem Gang 61 ist ein Verteiler 11 als Sender oder Sendeempfänger zugeordnet. Dem Gang 62 ist ein weiterer Verteiler 12 als Sender oder Sendeempfänger zugeordnet. Der Verteiler 11 bzw. Sender für den Gang 61 und die zugeordneten Empfänger bzw. Datenstationen 5a, 5b sind auf die gemeinsame Fläche 8a ausgerichtet. Der Verteiler 12, für den Gang 62 und die dazu gehörigen Empfänger bzw. Datenstationen 7a, 7b sind auf die gemeinsame Fläche 8b ausgerichtet.

Die Datenstationen 5a, 5b und 7a, 7b haben jeweils einen Field of View bzw. Empfangswinkel 9a, 9b bzw. 10a, 10b, der hier gleichzeitig der jeweiligen Abstrahlcharakteristik von Sendern entspricht, die gegebenenfalls in den Datenstationen 5a, 5b, 7a, 7b enthalten sind.

Die Verteiler 11 und 12 haben jeweils eine Abstrahlcharakteristik 11a bzw. 12a, die hier gleichzeitig dem Field of View von gegebenenfalls in den Verteilern 11, 12 enthaltenen Empfängern entspricht.

Die Datenstationen 5a, 5b und 7a, 7b sind jeweils an einem Sitz 3a, 3b bzw. 13a, 13b angebracht, wobei die Gruppe der Sitze 3a, 3b zum Gang 61 gehört und die Gruppe der Sitze 13a, 13b zum Gang 62 gehört.

Die beiden Kommunikationszellen sind unabhängig voneinander und können nicht übersprechen, da durch eine mittlere Gepäckablage 30 eine Abschirmung der gemeinsamen Fläche 8a für die Komponenten des Ganges 61 und umgekehrt eine Abschattung der Fläche 8b für Komponenten des Ganges 62 erfolgt.

Es entstehen auf diese Weise zwei Zellen eines Kommunikationsnetzes, welche den beiden Gängen 61 und 62 zugeordnet sind und unabhängig und ohne gegenseitiges Übersprechen betrieben werden können.

Durch diese Maßnahme kann die insgesamt übertragene Datenrate gegenüber einem einfachen System verdoppelt werden.

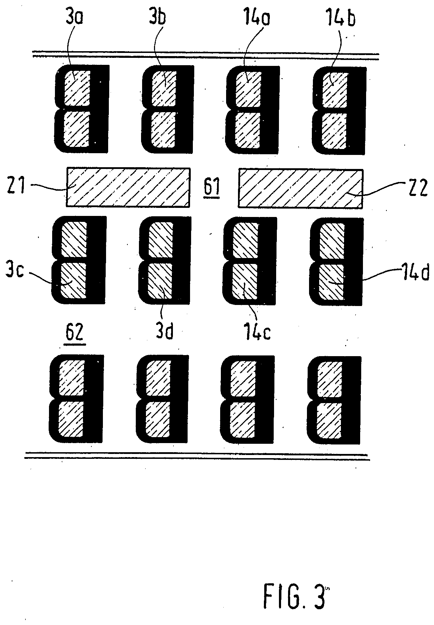

Fig. 3 zeigt eine weitere bevorzugte Ausführungsform der Erfindung, bei der entlang eines Ganges 61 bzw. 62 jeweils mehrere unabhängige Zellen vorhanden sind und betrieben werden. Dadurch kann eine noch weitaus höhere Datenrate erzielt werden, was zum Beispiel bei Transportmitteln mit sehr vielen Datenstationen, insbesondere bei Flugzeugen mit sehr hoher Sitzplatzzahl, erforderlich ist.

In dem hier gezeigten Beispiel sind die Sitze 3a, 3b, 3c, 3d einer ersten Zelle Z1 und weitere Sitze 14a, 14b, 14c, 14d einer zweiten Zelle Z2 zugeordnet. Dabei wird ein Übersprechen z.B. dadurch vermieden, dass die beleuchteten Flächen jeder einzelnen Zelle Z1, Z2 hinreichend separiert sind, so dass die Field-of-View-Bereiche der Sitze 14a - 14d nicht die beleuchteten Bereiche der Zelle Z1 sehen und umgekehrt.

Eine andere Lösung besteht darin, die Optiken der Verteiler so auszuformen, dass eine eindeutige Trennung der bestrahlten Flächen erfolgt, wie im Folgenden näher erläutert:

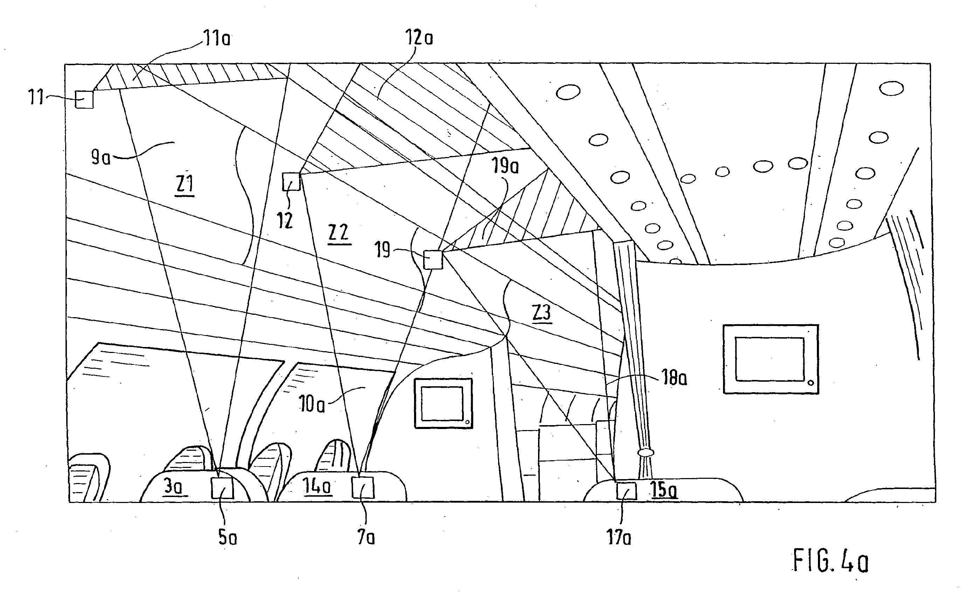

Fig. 4a zeigt den Innenraum bzw. die Kabine eines Passagierflugzeugs. An den Sitzreihen oder Sitzen 3a, 14a, 15a ist jeweils eine Datenstation 5a, 7a und 17a angeordnet. Am Deckenpaneel oder Wandpaneel sind eine Vielzahl von Verteilern 11, 12, 19 befestigt, die quer zur Rumpfachse bzw. quer zur Längsrichtung der Kabine mit einem Strahlwinkel 11a, 12a, 19a strahlen. Somit werden eine Vielzahl von getrennten Zellen gebildet, in diesem Beispiel drei.

Dabei ist die Datenstation 5a mit ihrem Field of View bzw. Empfangsöffnungswinkel 9a genau dem Verteiler 11 zugeordnet. Die Datenstation 7a mit ihrem Field of View 10a ist dem Verteiler 12 zugeordnet und die Datenstation 17a mit ihrem Field of View 18a ist dem Verteiler 19 zugeordnet. Die Verteiler 11, 12 und 19 mit ihren Abstrahlwinkeln 11a, 12a, 19a bilden verschiedene, voneinander unabhängige Zellen Z1, Z2, Z3. Auf diese Weise ermöglichst die Strahlformung des sehr gut definiert formbaren optischen Mediums eine eindeutige Trennung der gemeinsamen Flächen und damit eine übersprechungsfreie Erzeugung getrennter Kommunikationszellen.

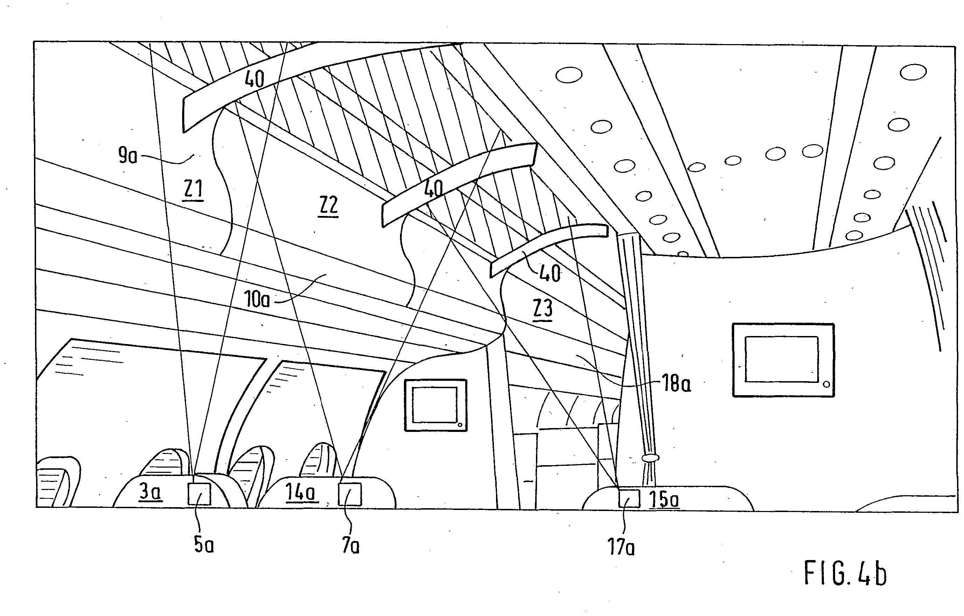

Fig. 4b zeigt eine weitere Ausführungsform der Erfindung, bei der Abschattungselemente 40 an den Deckenpaneelen der Kabine angebracht sind, welche die Strahlausbreitung begrenzen. Dadurch entstehen abgeschattete Bereiche, die den Field of View 9a, 10a, 18a der jeweiligen Datenstation 5a, 7a, 17a einschränken, so dass auch hier getrennte Zellen Z1, Z2 und Z3 entstehen. Durch die Elemente zur Abschattung 40 wird insbesondere die Strahlausbreitung der einzelnen Verteiler begrenzt, so dass jeder Verteiler ein zugehöriges Flächenelement beleuchtet, das gegenüber dem Lichteinfall anderer Verteiler abgeschattet ist. Die an den Sitzen 3a, 14a und 15a angeordneten Datenstationen 5a, 7a und 17a gehören voneinander getrennten, unabhängigen Kommunikationszellen Z1, Z2 und Z3 an, die verschiedene, voneinander getrennte Verteiler bzw. Sender aufweisen und verschiedene, voneinander durch die Abschattungselemente 40 getrennte Flächenelemente beleuchten, die das Licht reflektieren bzw. streuen. Die Field of Views 9a, 10a und 18a sind jeweils auf genau ein derartiges Flächenelement ausgerichtet.

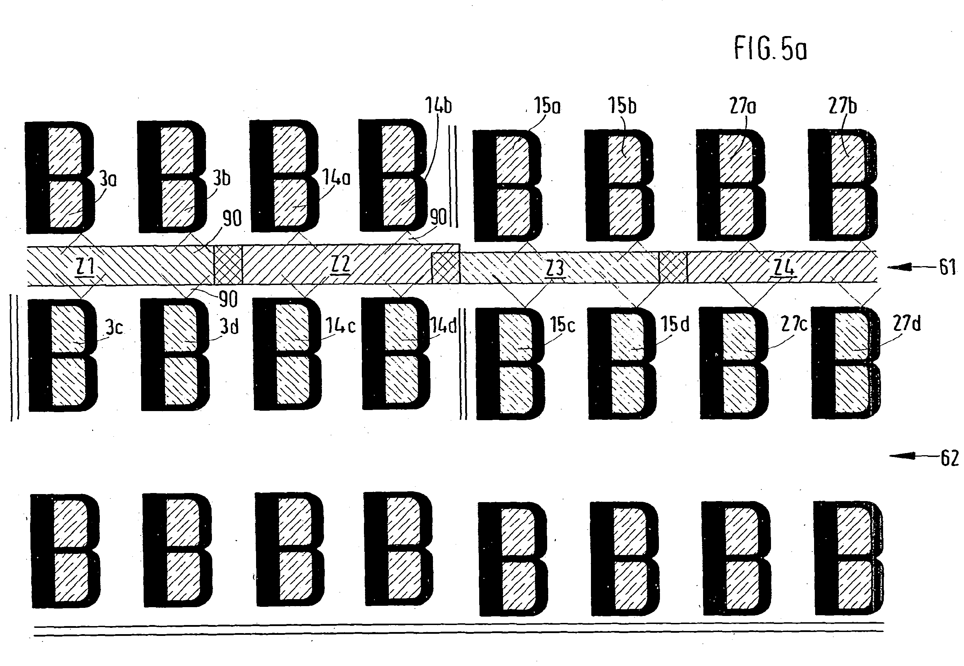

Fig. 5a zeigt eine besonders vorteilhafte Ausführungsform der Erfindung, bei der entlang des Ganges 61 des Flugzeugs mehrere übersprechungsfreie Zellen Z1, Z2, Z3, Z4 betrieben werden, wobei zwei unterschiedliche Übertragungswellenlängen L1, L2 verwendet werden. In diesem Beispiel müssen die Strahlen und Field of Views der jeweiligen Zellen nicht speziell geformt oder beschränkt werden, sondern sie können sogar optisch überlappen. Dabei sind die einzelnen Zellen Z1, Z2, Z3, Z4 so ausgestaltet, dass sich die verwendeten Wellenlängen entlang der Reihen der Zellen abwechseln. In diesem Beispiel wird die Zelle Z1 mit der Wellenlänge L1 betrieben, während die daran angrenzende Zelle Z2 mit einer Wellenlänge L2 betrieben wird, die sich von der Wellenlänge L1 unterscheidet. In der übernächsten Zelle Z3, die an die Zelle Z2 angrenzt, wird dann wieder die erste Wellenlänge L1 verwendet, da diese dann im allgemeinen schon aus dem Bereich des Field of View 90 der Datenstationen der ersten Zelle Z1 stammt. Auf diese Weise wird mit nur zwei unterschiedlichen Wellenlängen, welche alternierend verwendet werden, eine nahezu beliebige Anreihung von voneinander unabhängigen Kommunikationszellen realisiert. Im vorliegenden Beispiel sind die Sitze 3a - d der ersten Zelle Z1 zugeordnet, die Sitze 14a - 14d der zweiten Zelle Z2, die Sitze 15a - 15d der dritten Zelle Z3 und die Sitze 27a - 27d der vierten Zelle Z4. Alle Zellen befinden sich entlang des Ganges 61. Der zweite Gang 62 kann analog zum ersten Gang 61 ausgestaltet sein, also Zellen Z1 bis Z4 aufweisen.

Ein besonderes Beispiel könnte wie folgt aussehen :
In einem Flugzeug, bestehend aus zwei Gängen und drei Sitzreihen, die äußeren Sitzreihen mit jeweils 2, die innere Sitzreihe mit 4 Sitzen bestückt, insgesamt soll das Flugzeug beispielsweise 336 derart angeordnete Sitzplätze aufweisen, werden die Deckenpaneele der beiden Gänge als gemeinsame Fläche zur Ausleuchtung /als Sichtfeld verwendet. Alle drei Sitzreihen wird zwischen den beiden Wellenlängen abgewechselt. Die Datenstationen der mittleren Sitzreihe werden derart ausgerichtet, dass sie jeweils zur näherliegenden Gangpaneele ausgerichtet sind.

Auf diese Weise sind immer 12 Sitze einer Kommunikationszelle zugeordnet. Entlang jeden Ganges entstehen durch das Alternieren der verwendeten Wellenlänge 14 unabhängige Kommunikationszellen, insgesamt also 28.

Weist jede Zelle eine Datenrate von beispielsweise 100 Mbit/s auf, kann im ganzen Flugzeug daher eine Rate von 2,8 Gbit/s unabhängig voneinander übertragen werden. Jedem einzelnen Sitz kann eine Rate von 8 Mbit/s zugeordnet werden. Es kann aber auch jeder der 12 Sitze einer 100 Mbit/s-Zelle so geschaltet sein, dass er je nach Bedarf die volle Datenrate von 100 Mbit/s nutzen kann, wenn die anderen Sitze keine Daten übertragen, bzw. sich die Datenrate anders aufteilen.

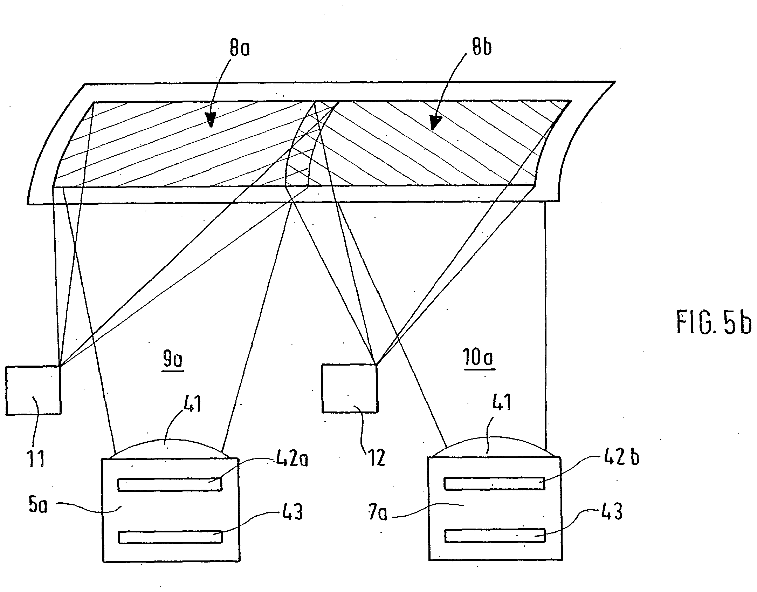

Fig. 5b zeigt einen Detailausschnitt der beschriebenen Anordnung mit überlappenden Zellen. Dabei bestrahlt der Verteiler 11, der ein Sender oder Sendeempfänger ist, die Fläche 8a mit Lichtquellen in Form von LEDs der Wellenlänge L1, welche vom Empfänger der Datenstation 5a durch dessen Field of View 9a gesehen wird. Das von der Fläche 8a reflektierte Licht gelangt über eine Optik 41, die den Field of View 9a definiert, auf einen Fotodetektor 43, wobei zwischen der Optik 41, die als Linse ausgestaltet ist, und dem Fotodetektor 43 ein Filter 42a angebracht ist. Der Filter 42a lässt Licht der Wellenlänge L1 transmittieren und sperrt Licht der Wellenlänge L2. Dieser Filter kann selbstverständlich auch auf der Linse 41 oder auf dem Fotodetektor 43 aufgebracht sein, z.B. in Form dielektrischer Schichten und/oder durch entsprechende Materialwahl oder Färbung der Linse 41.

Ein weiterer Verteiler 12 bestrahlt die Fläche 8b, welche mit der Fläche 8a überlappt, wobei Lichtquellen der Wellenlänge L2 verwendet werden. Die Überlappung ist nicht zwingend, sondern es kann auch eine Trennung zwischen dem beleuchteten Flächen 8a und 8b vorgesehen sein. Die dem Verteiler 12 zugeordnete Datenstation 7a ist analog zur Datenstation 5a ausgestaltet, wobei jedoch der Filter 42b das Licht der Wellenlänge L1 sperrt, während er das vom Verteiler 12 ausgesandte Licht der Wellenlänge L2 transmittieren lässt.

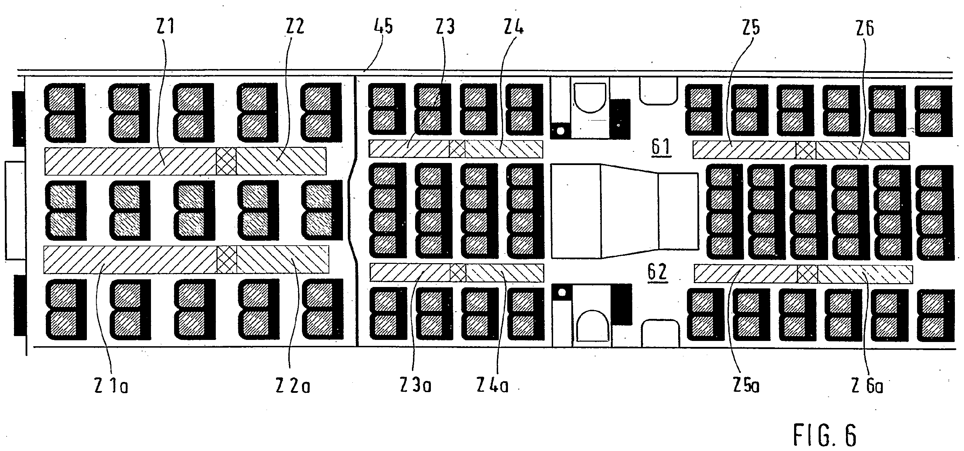

Fig. 6 zeigt eine Kombination der verschiedenen Merkmale des erfindungsgemäßen Kommunikationssystems, gemäß einer noch weiteren bevorzugten Ausführungsform. Diese Kombination weist sehr viele voneinander unabhängige Zellen auf und eine somit extrem erhöhte Datenrate gegenüber der Verwendung von nur einer einzigen Zelle. Die Zellen Z1 und Z1a in den benachbarten Gängen 61 und 62 können dieselbe Wellenlänge aufweisen, jedoch findet zwischen ihnen kein Übersprechen statt, da die mittleren Gepäckablagen 30 (s. Fig. 2) des Flugzeuges die gemeinsamen Flächen beider Zellen Z1, Z1avoneinander optisch abschatten und die jeweiligen Empfänger gemeinsamen Flächen der jeweils anderen Zellen nicht sehen können.

Entlang des Ganges 61 befindet sich eine weitere Zelle Z2, die an die Zelle Z1 angrenzt, wobei die gegebenenfalls überlappenden optischen Bereiche der Zellen Z1 und Z2 durch Verwendung einer zweiten Wellenlänge gegen Übersprechen getrennt sind. Analog dazu sind im benachbarten Gang 62 die beiden Zellen Z1 und Z2 angeordnet.

Im Gang 61 sind die beiden nächsten Zellen Z3 und Z4 gegenüber den Zellen Z1 und Z2 durch ein abschattendes Element 45 derart gegeneinander abgeschattet, dass hier kein Übersprechen stattfinden kann. Das abschattende Element 45 ist beispielsweise ein Klassenteiler der Passagierkabine bzw. ein Vorhang. Durch dieses Abschattungselement 45 einerseits, aber auch durch die Separation von den Zellen Z1 und Z2 findet zu diesen ebenso kein Übersprechen statt. Analog dazu sind im Gang 62 die Zellen Z3a und Z4a angeordnet, welche gegenüber den Zellen Z1a und Z2a ebenfalls durch das Abschattungselement 45 gegen Übersprechen gesichert sind. Die beiden jeweils aneinander grenzenden Zellen Z3 und Z4 bzw. Z3a und Z4a haben unterschiedliche Wellenlängen L1 und L2.

Die nächsten Zellen Z5 und Z6 im Gang 61 bzw. Z5a und Z6a in Gang 62 sind gegenüber den Zellen Z4 und Z4a durch eine größere räumliche Separation getrennt, d.h., die gemeinsamen Flächen der Zellen liegen jeweils außerhalb des Field of View der Empfänger der jeweils anderen Zelle, so dass hier ebenso kein Übersprechen stattfindet. Die jeweils aneinander grenzenden Zellen Z5 und Z6 bzw. Z5a und Z6a unterscheiden sich wiederum in ihren Wellenlängen L1 und L2.

Entsprechend kann der gesamte Flugzeugrumpf durch geeignete Kombination oder Auswahl der erfindungsgemäßen Maßnahmen derart mit unabhängigen, übersprechfreien Zellen versehen werden, dass ein sehr breitbandiges Datennetz mit einem Vielfachen der nominellen Bandbreite einer einzelnen Zelle realisiert werden kann. Durch die erfindungsgemäßen Maßnahmen werden hierbei insbesondere die vorteilhaften Eigenschaften des optischen Übertragungsmediums ausgenutzt - im Bereich der Funkübertragung wäre eine derartige Vielfachbelegung desselben Übertragungsbandes aufgrund des hier völlig anderen Ausbreitungsverhaltens nicht möglich.

Das vorgeschlagene Datenübertragungssystem ist daher zur Übertragung sehr hoher Datenraten geeignet, wobei es eine geringe EMV verursacht und dennoch eine sehr hohe Flexibilität aufweist. Es ist keine direkte Sichtverbindung zwischen Sender und Empfänger erforderlich, so dass bezüglich ihrer räumlichen Anordnung eine sehr hohe Flexibilität gegeben ist.

Die Sende- und Empfangsmodule können direkt in Datenstationen integriert werden, wie beispielsweise in Displays, Kleinrechner usw. Die Anzahl der Sende- und Empfangselemente ist nicht durch Kabel, Stecker oder Ähnliches beschränkt und kann flexibel gehalten werden.

Weiterhin ist eine erhöhte Abhörsicherheit gegeben, was einen Vorteil gegenüber herkömmlichen Funklösungen bietet. Durch die geringe Durchdringungsmöglichkeit optischer Strahlung gegenüber den meisten Materialien kann keine modulierte Lichtstrahlung aus dem Transportmittel herausdringen. Im Falle von Fenstern ist aufgrund der hohen Divergenz und der relativ geringen Intensität der gestreuten Strahlung im Abstand weniger Meter vom Transportmittel keine Strahlung mehr detektierbar. Zur weiteren Unterdrückung auch dieser Reststrahlung können zudem Fensterflächen derart beschichtet werden, dass die Wellenlänge der Senderstrahlung, welche im Allgemeinen im nahen Infrarot liegt, nicht durch das Fenster transmittiert werden kann, ohne Einschränkung der Transmission der Fenster im sichtbaren Bereich. Hierzu können z.B. bestimmte Beschichtungen, insbesondere dielektrische Schichten, vorgesehen sein.

Zusammengefasst stellt die Erfindung ein optisches Freiraum-Datenkommunikationssystem zur breitbandigen Übertragung von hochratigen Daten zur Verfügung, beispielsweise Videodaten, bestehend aus mindestens einem Sender und mindestens einem Empfänger, wobei die Datenübertragung innerhalb eines Transportmittels, wie beispielsweise Auto, Flugzeug, Zug, Schiff, Satellit, stattfindet, und der Sender mindestens eine Lichtquelle, wie beispielsweise LID, VCSEL, oder Ähnliches enthält, welche mit der Frequenz der zu übertragenden und gegebenenfalls codierten Daten moduliert wird, und der Empfänger mindestens einen Fotodetektor enthält, welcher das im Innenraum des Transportmittels gestreute bzw. an den Wänden reflektierte Licht empfängt, ohne dass eine direkte Sichtverbindung zwischen Sender und Empfänger gegeben sein muss, und dieses modulierte Lichtsignal wieder in ein elektrisches Signal umwandelt.

Insbesondere ergeben sich daraus die folgenden Vorteile:
Es ist keine Verkabelung erforderlich, so dass das Gewicht reduziert wird. Stecker, Kabelverteiler oder Ähnliches entfallen. Dadurch ist eine erhöhte Flexibilität gegeben. Die Dämpfung ist gering. Mit dem System ist eine Übertragung hoher Datenraten möglich, wobei nur eine geringe oder gar keine EMV vorhanden ist. Weiterhin ist keine Sichtverbindung erforderlich, weshalb das System flexibel platzierbar ist. Eine Integration in Displays oder Ähnliches ist möglich. Ferner ergibt sich eine erhöhte Abhörsicherheit.

## Patentansprüche

1. Indirektes optisches Freiraum-Kommunikationssystem zur breitbandigen Übertragung von hochratigen Daten, mit
einem Sender (11, 12, 19), der eine modulierbare Lichtquelle umfasst, und
einem Empfänger (5a, 5b, 7a, 7b; 17a), der einen Fotodetektor (43) umfasst, um vom Sender (11, 12, 19) abgestrahltes Licht zu empfangen und in ein elektrisches Signal umzuwandeln, ohne dass eine direkte Sichtverbindung zwischen Sender (11, 12, 19) und Empfänger (5a, 5b, 7a, 7b; 17a) gegeben sein muss und ohne dass eine Verkabelung zwischen Sender (11, 12, 19) und Empfänger (5a, 5b, 7a, 7b; 17a) zur Datenübertragung notwendig ist;
wobei der Sender (11, 12, 19) und der Empfänger (5a, 5b, 7a, 7b; 17a) auf mindestens eine gemeinsame Fläche (8a, 8b) gerichtet sind, die das vom Sender (11, 12, 19) abgestrahlte Licht reflektiert, bevor es zum Empfänger (5a, 5b, 7a, 7b; 17a) gelangt,
**dadurch gekennzeichnet, dass**
das Freiraum-Kommunikationssystem zellulär aufgebaut ist und mehrere Zellen (Z1, Z2, Z3, Z4) aufweist, die jeweils mindestens einen Sender (11, 12, 19), mindestens einen zugehörigen Empfänger (5a, 5b, 7a, 7b; 17a) und mindestens eine reflektierende Fläche (8a, 8b) umfassen, die reflektierenden Flächen (8a, 8b) der Zellen (Z1, Z2, Z3) im Innenraum eines Flugzeugs angeordnet sind, in dem die Datenübertragung erfolgt, wobei die Zellen (Z1, Z2, Z3, Z4) als Reihe angeordnet sind,
wobei die Zellen (Z1, Z2, Z3, Z4) derart ausgestaltet sind, dass die Lichtquellen benachbarter Zellen (Z1, Z2, Z3, Z4) unterschiedliche Wellenlängen (L1, L2) aufweisen, so dass ein Übersprechen zu einer jeweils benachbarten Zelle aktiv verhindert wird, so dass die Zellen (Z1, Z2, Z3, Z4) voneinander unabhängig sind.

2. Indirektes optisches Freiraum-Kommunikationssystem nach Anspruch 1, **gekennzeichnet durch** Mittel zur Strahlformung des jeweiligen Senders (11, 12, 19), und/oder Mittel (41) zur Begrenzung des Empfangsöffnungswinkels des jeweiligen Empfängers (5a, 5b), um das Übersprechen zu verhindern.

3. Indirektes optisches Freiraum-Kommunikationssystem nach Anspruch 1 oder 2, **gekennzeichnet durch** ein oder mehrere Abschattungselemente (30; 40; 45) zur Abschattung des von der gemeinsamen Fläche (8a, 8b) einer Zelle (Z1) reflektierten Lichts gegenüber einem Empfänger (7a), der zu einer anderen Zelle (Z2) gehört.

4. Indirektes optisches Freiraum-Kommunikationssystem nach einem der vorhergehenden Ansprüche, **dadurch gekennzeichnet, dass** Reflexions- oder Streubereiche der gemeinsamen Flächen (8a, 8b) innerhalb benachbarter Zellen sich nicht gegenseitig überlappen.

5. Indirektes optisches Freiraum-Kommunikationssystem nach einem der vorhergehenden Ansprüche, **dadurch gekennzeichnet, dass** die Zellen (Z1, Z2) räumlich voneinander getrennt sind.

6. Indirektes optisches Freiraum-Kommunikationssystem nach einem der vorhergehenden Ansprüche, **dadurch gekennzeichnet, dass** die Fläche (8a, 8b) einer Zelle (Z1, Z2, Z3, Z4) eine Oberfläche einer Wand oder eines Gegenstandes im Inneren eines Raumes ist, in dem die Daten übertragen werden.

7. Indirektes optisches Freiraum-Kommunikationssystem nach einem der vorhergehenden Ansprüche, **dadurch gekennzeichnet, dass** die Lichtquelle des jeweiligen Senders (11, 12, 19) ein oder mehrere LED's, Laserdioden, Kantenemitter-Laserdioden, und/oder VCSEL-Laser umfasst.

8. Indirektes optisches Freiraum-Kommunikationssystem nach einem der vorhergehenden Ansprüche, **dadurch gekennzeichnet, dass** der jeweilige Empfänger (5a, 5b, 7a, 7b; 17a) eine Lichtquelle und der jeweilige Sender (11, 12, 19) einen Fotodetektor umfasst, um eine bidirektionale Kommunikation auszuführen.

9. Indirektes optisches Freiraum-Kommunikationssystem nach einem der vorhergehenden Ansprüche, **dadurch gekennzeichnet, dass** im Betrieb ein einziger Sender (11, 12) einer Zelle (Z1, Z2) eine Vielzahl von Empfängern (5a, 5b, 7a, 7b; 17a) gleichzeitig mit gleichen oder unterschiedlichen Daten versorgt.

10. Verfahren zur indirekten optischen breitbandigen Freiraum-Übertragung von hochratigen Daten, mit den Schritten:
Erzeugen von Licht mittels einer Lichtquelle, das mit der Frequenz von zu übertragenden Daten moduliert wird;
Senden des modulierten Lichts auf eine Fläche (8a, 8b), die das Licht reflektiert und/oder streut;
Empfangen des von der Fläche (8a, 8b) gestreuten und/oder reflektierten Lichts, so dass es auf indirektem Wege von der Lichtquelle zum Empfänger (5a, 5b, 7a, 7b; 17a) gelangt; und
Umwandeln des modulierten Lichts in ein elektrisches Signal,
**dadurch gekennzeichnet, dass**
das Senden und das Empfangen des Lichts in mehreren voneinander unabhängigen Zellen (Z1, Z2, Z3, Z4) erfolgt, die jeweils mindestens einen Sender (11, 12, 19) mindestens einen Empfänger (5a, 5b, 7a, 7b; 17a) und mindestens eine reflektierende Fläche (8a, 8b) umfassen, wobei die
reflektierenden Flächen (8a, 8b) der Zellen (Z1, Z2, Z3) im Innenraum eines Flugzeugs angeordnet sind, in dem die Datenübertragung erfolgt, wobei die Zellen (Z1, Z2, Z3, Z4) als Reihe angeordnet sind,
wobei in benachbarten Zellen (Z1, Z2) Licht mit unterschiedlichen Wellenlängen (L1, L2) verwendet wird, so dass ein Übersprechen zu einer jeweils benachbarten Zelle (Z1, Z2, Z3, Z4) aktiv verhindert wird.

11. Verfahren nach Anspruch 10, **dadurch gekennzeichnet, dass** das vom Sender einer Zelle (Z1, Z2, Z3) abgestrahlte Licht in seinem Abstrahlwinkel (9a, 10a, 18a) derart begrenzt wird, dass es nicht zu Empfängern (5a, 7a, 17a) anderer Zellen (Z1, Z2, Z3) gelangt.

12. Verfahren nach Anspruch 10 oder 11, **dadurch gekennzeichnet, dass** der Empfangsöffnungswinkel (9a) des jeweiligen Empfängers (5a) einer Zelle (Z1) derart begrenzt wird, dass das Licht von den Lichtquellen benachbarter Zellen (Z2, Z3) nicht zum Empfänger (5a) gelangt.

13. Verfahren nach einem der Ansprüche 10 bis 12, **dadurch gekennzeichnet, dass** das von der Fläche (8a, 8b) einer Zelle (Z1) reflektierte Licht gegenüber einem Empfänger (7a), der zu einer anderen Zelle (Z2) gehört, abgeschattet wird.

## Claims

1. An indirect optical free-space communication system for the broadband transmission of high-speed data, comprising
a transmitter (11, 12, 19) with a light source that can be modulated and
a receiver (5a, 5b, 7a, 7b; 17a) with a photodetector (43) for receiving and converting light emitted from the transmitter (11, 12, 19) into an electric signal without requiring a direct line-of-sight between the transmitter (11, 12, 19) and the receiver (5a, 5b, 7a, 7b; 17a) and without requiring a cable connection between the transmitter (11, 12, 19) and the receiver (5a, 5b, 7a, 7b; 17a) for the data transmission;
wherein the transmitter (11, 12, 19) and the receiver (5a, 5b, 7a, 7b; 17a) are directed onto at least one common surface (8a, 8b), which reflects the light emitted from the transmitter (11, 12, 19) before it reaches the receiver (5a, 5b, 7a, 7b; 17a),
**characterized in that**
that the free-space communication system is cellular and comprises multiple cells (Z1, Z2, Z3, Z4), which respectively have at least one transmitter (11, 12, 19), at least one corresponding receiver (5a, 5b, 7a, 7b;
17a) and at least one reflective surface (8a, 8b), and **in that**
the reflective surfaces (8a, 8b) of the cells (Z1, Z2, Z3) are arranged in the interior of an aircraft, in which the data transmission takes place, wherein the cells (Z1, Z2, Z3, Z4) are arranged in the form of a row, and
wherein the cells (Z1, Z2, Z3, Z4) are configured in such a way that the light sources of adjacent cells (Z1, Z2, Z3, Z4) have different wavelengths (L1, L2) such that crosstalk with a respective adjacent cell is actively prevented and the cells (Z1, Z2, Z3, Z4) are therefore independent of one another.

2. The indirect optical free-space communication system according to claim 1, **characterized by** means for shaping the beam of the respective transmitter (11, 12, 19) and/or means (41) for limiting the reception beam width of the respective receiver (5a, 5b) in order to prevent crosstalk.

3. The indirect optical free-space communication system according to claim 1 or 2, **characterized by** one or more shading elements (30; 40; 45) for shading the light reflected by the common surface (8a, 8b) of a cell (Z1) relative to a receiver (7a) of another cell (Z2).

4. The indirect optical free-space communication system according to one of the preceding claims, **characterized in that** the reflection or scattering areas of the common surfaces (8a, 8b) do not overlap one another within adjacent cells.

5. The indirect optical free-space communication system according to one of the preceding claims, **characterized in that** the cells (Z1, Z2) are spatially separated from one another.

6. The indirect optical free-space communication system according to one of the preceding claims, **characterized in that** the surface (8a, 8b) of a cell (Z1, Z2, Z3, Z4) is a surface of a wall or an object in the interior of a space, in which the data is transmitted.

7. The indirect optical free-space communication system according to one of the preceding claims, **characterized in that** the light source of the respective transmitter (11, 12, 19) comprises one or more LEDs, laser diodes, edge-emitting laser diodes and/or VCSEL lasers.

8. The indirect optical free-space communication system according to one of the preceding claims, **characterized in that** the respective receiver (5a, 5b, 7a, 7b; 17a) comprises a light source and the respective transmitter (11, 12, 19) comprises a photodetector in order to realize bidirectional communication.

9. The indirect optical free-space communication system according to one of the preceding claims, **characterized in that** a single transmitter (11, 12) of a cell (Z1, Z2) simultaneously supplies a plurality of receivers (5a, 5b, 7a, 7b; 17a) with identical or different data during the operation of the system.

10. A method for the indirect optical broadband transmission of high-speed data in free space, comprising the steps of:
generating light by means of a light source and modulating said light with the frequency of data to be transmitted;
transmitting the modulated light onto a surface (8a, 8b) that reflects and/or scatters the light;
receiving the light scattered and/or reflected by the surface (8a, 8b) such that it reaches the receiver (5a, 5b, 7a, 7b; 17a) from the light source along an indirect path; and
converting the modulated light into an electric signal,
**characterized in that**
the transmission and the reception of the light takes place in multiple cells (Z1, Z2, Z3, Z4), which are independent of one another and respectively comprise at least one transmitter (11, 12, 19), at least one receiver (5a, 5b, 7a, 7b; 17a) and at least one reflective surface (8a, 8b), wherein
the reflective surfaces (8a, 8b) of the cells (Z1, Z2, Z3) are arranged in the interior of an aircraft, in which the data transmission takes place, wherein the cells (Z1, Z2, Z3, Z4) are arranged in the form of a row, and
wherein light with different wavelengths (L1, L2) is used in adjacent cells (Z1, Z2) such that crosstalk with a respective adjacent cell (Z1, Z2, Z3, Z4) is actively prevented.

11. The method according to claim 10, **characterized in that** the light emitted by the transmitter of a cell (Z1, Z2, Z3) is limited with respect to its beam width (9a, 10a, 18a) in such a way that it does not reach receivers (5a, 7a, 17a) of other cells (Z1, Z2, Z3).

12. The method according to claim 10 or 11, **characterized in that** the reception beam width (9a) of the respective receiver (5a) of a cell (Z1) is limited in such a way that the light from the light sources of adjacent cells (Z2, Z3) does not reach the receiver (5a).

13. The method according to one of claims 10-12, **characterized in that** the light reflected by the surface (8a, 8b) of a cell (Z1) is shaded relative to a receiver (7a) of another cell (Z2).

## Revendications

1. Système de communication optique indirect en espace dégagé pour la transmission large bande de données à haut débit, avec
un émetteur (11, 12, 19) qui comprend une source lumineuse modulable, et
un récepteur (5a, 5b, 7a, 7b ; 17a) qui comprend un photodétecteur (43) pour réceptionner la lumière émise par l'émetteur (11, 12, 19) et la convertir en un signal électrique sans qu'il doive y avoir une visibilité directe entre l'émetteur (11, 12, 19) et le récepteur (5a, 5b, 7a, 7b; 17a) et sans nécessité d'un câblage entre l'émetteur (11, 12, 19) et le récepteur (5a, 5b, 7a, 7b ; 17a) pour la transmission de données ;
dans lequel l'émetteur (11, 12, 19) et le récepteur (5a, 5b, 7a, 7b ; 17a) sont dirigés vers au moins une surface commune (8a, 8b) qui réfléchit la lumière émise par l'émetteur (11, 12, 19) avant qu'elle n'atteigne le récepteur (5a, 5b, 7a, 7b ; 17a), **caractérisé en ce**
**que** le système de communication en espace dégagé est structuré de manière cellulaire et présente plusieurs cellules (Z1, Z2, Z3, Z4) qui comprennent respectivement au moins un émetteur (11, 12, 19), au moins un récepteur (5a, 5b, 7a, 7b ; 17a) associé, et au moins une surface réfléchissante (8a, 8b),
**que** les surfaces réfléchissantes (8a, 8b) des cellules (Z1, Z2, Z3) sont disposées dans l'espace intérieur d'un avion dans lequel la transmission de données s'effectue, dans lequel les cellules (Z1, Z2, Z3, Z4) sont disposées en tant que rangée,
dans lequel les cellules (Z1, Z2, Z3, Z4) sont réalisées de telle sorte que les sources lumineuses de cellules (Z1, Z2, Z3, Z4) voisines présentent des longueurs d'onde (L1, L2) différentes de sorte qu'une diaphonie vers une cellule respectivement voisine est activement empêchée de sorte que les cellules (Z1, Z2, Z3, Z4) sont indépendantes les unes des autres.

2. Système de communication optique indirect en espace dégagé selon la revendication 1,
**caractérisé par** des moyens pour la formation de faisceau de l'émetteur (11, 12, 19) respectif et/ou des moyens (41) pour limiter l'angle d'ouverture de réception du récepteur (5a, 5b) respectif pour empêcher la diaphonie.

3. Système de communication optique indirect en espace dégagé selon la revendication 1 ou 2,
**caractérisé par** un ou plusieurs éléments d'occultation (30 ; 40 ; 45) pour occulter la lumière réfléchie par la surface commune (8a, 8b) d'une cellule (Z1) par rapport à un récepteur (7a) qui appartient à une autre cellule (Z2).

4. Système de communication optique indirect en espace dégagé selon l'une des revendications précédentes,
**caractérisé en ce que** des zones de réflexion ou de diffusion des surfaces communes (8a, 8b) à l'intérieur de cellules voisines ne se chevauchent pas les unes les autres.

5. Système de communication optique indirect en espace dégagé selon l'une des revendications précédentes,
**caractérisé en ce que** les cellules (Z1, Z2) sont séparées spatialement les unes des autres.

6. Système de communication optique indirect en espace dégagé selon l'une des revendications précédentes,
**caractérisé en ce que** la surface (8a, 8b) d'une cellule (Z1, Z2, Z3, Z4) est une surface d'une paroi ou d'un objet dans l'intérieur d'un espace dans lequel les données sont transmises.

7. Système de communication optique indirect en espace dégagé selon l'une des revendications précédentes,
**caractérisé en ce que** la source lumineuse de l'émetteur (11, 12, 19) respectif comprend un(e) ou plusieurs DEL, diodes laser, diodes laser à émission par les bords et/ou des lasers VCSEL.

8. Système de communication optique indirect en espace dégagé selon l'une des revendications précédentes,
**caractérisé en ce que** le récepteur (5a, 5b, 7a, 7b ; 17a) respectif comprend une source lumineuse et l'émetteur (11, 12, 19) respectif, un photodétecteur pour réaliser une communication bidirectionnelle.

9. Système de communication optique indirect en espace dégagé selon l'une des revendications précédentes,
**caractérisé en ce que**, lors du fonctionnement, un seul émetteur (11, 12) d'une cellule (Z1, Z2) alimente simultanément une pluralité de récepteurs (5a, 5b, 7a, 7b ; 17a) avec des données identiques ou différentes.

10. Procédé pour la transmission optique indirecte large bande en espace dégagé de données à haut débit, avec les étapes suivantes :
la génération de lumière au moyen d'une source lumineuse, laquelle est modulée avec la fréquence de données à transmettre ;
l'envoi de la lumière modulée sur une surface (8a, 8b) qui réfléchit et/ou diffuse la lumière ;
la réception de la lumière diffusée et/ou réfléchie par la surface (8a, 8b) de sorte qu'elle parvienne de manière indirecte de la source lumineuse au récepteur (5a, 5b, 7a, 7b ; 17a) ; et
la conversion de la lumière modulée en un signal électrique,
**caractérisé en ce que**
l'envoi et la réception de la lumière s'effectue dans plusieurs cellules (Z1, Z2, Z3, Z4) indépendantes les unes des autres, lesquelles comprennent respectivement au moins un émetteur (11, 12, 19), au moins un récepteur (5a, 5b, 7a, 7b ; 17a) et au moins une surface réfléchissante (8a,8b), dans lequel les surfaces réfléchissantes (8a, 8b) des cellules (Z1, Z2, Z3, Z4) sont disposées dans l'espace intérieur d'un avion dans lequel la transmission de données s'effectue, dans lequel les cellules (Z1, Z2, Z3, Z4) sont disposées en tant que rangée,
dans lequel, dans des cellules voisines (Z1, Z2), de la lumière avec des longueurs d'onde (L1, L2) différentes est utilisée de sorte qu'une diaphonie vers une cellule (Z1, Z2, Z3, Z4) respectivement voisine est activement empêchée.

11. Procédé selon la revendication 10, **caractérisé en ce que** la lumière émise par l'émetteur d'une cellule (Z1, Z2, Z3) est limitée concernant son angle d'émission (9a, 10a, 18a) de telle sorte qu'elle n'atteint pas des récepteurs (5a, 7a, 17a) d'autres cellules (Z1, Z2, Z3).

12. Procédé selon la revendication 10 ou 11, **caractérisé en ce que** l'angle d'ouverture de réception (9a) du récepteur (5a) respectif d'une cellule (Z1) est limité de telle sorte que la lumière des sources lumineuses de cellules (Z2, Z3) voisines n'atteint pas le récepteur (5a).

13. Procédé selon l'une des revendications 10 à 12, **caractérisé en ce que** la lumière réfléchie par la surface (8a, 8b) d'une cellule (Z1) est occultée par rapport à un récepteur (7a) appartenant à une autre cellule (Z2).
